# EUROPÄISCHE PATENTANMELDUNG

(11) **EP 4 140 345 A1**
(43) Veröffentlichungstag der Anmeldung: **01.03.2023**
(21) Anmeldenummer: 22191704.0
(22) Anmeldetag: 23.08.2022
(51) Int. Cl.: A43B 7/142, B33Y 80/00, A43B 7/144, A43B 17/08

(54) **EINLEGESOHLE**

(30) Priorität: 23.08.2021 DE 102021121757
(71) Anmelder: Schein Orthopädie Service KG, 42897 Remscheid (DE)
(72) Erfinder: Schein, Arnd, 42857 Remscheid (DE)
(74) Vertreter: Grundmann, Dirk

(57) **Zusammenfassung**

Die Erfindung betrifft eine Einlegesohle mit einem eine erste Breitseitenfläche (2) zur Stützung eines Fußgewölbes und eine von dieser weggewandten zweiten Breitseitenfläche zur Abstützung in einem Schuh aufweisenden Grundkörper (1), der eine Vielzahl von zumindest zu einer der Breitseitenflächen offenen Zellen aufweist, wobei benachbarte Zellen durch Zellwände ausbildende Stege voneinander getrennt sind. Erfindungsgemäß ist vorgesehen, dass zumindest einige der Stege Abschnitte aufweisen, die derart in einer Richtung schräg zu einer lokalen Flächennormalen der Breitseitenfläche verlaufen, dass sie sich bei einem in Richtung der lokalen Flächennormalen ausgeübtem Druck verbiegen und/oder dass die Zellwände zumindest einiger der Zellen mehrfach gewunden sind und/oder dass die Stege einen offenporigen Schaum ausbilden. Bevorzugt besteht der Grundkörper (1) aus thermoplastischem Polyurethan und/oder ist mit dem Pulver-Sinterverfahren oder dem Laser-Sinterverfahren oder im 3-D-Druck gefertigt.

## Beschreibung

### Gebiet der Technik

Die Erfindung betrifft eine Einlegesohle mit einem eine erste Breitseitenfläche zur Stützung eines Fußgewölbes und eine von dieser weggewandten zweiten Breitseitenfläche zur Abstützung in einem Schuh aufweisenden Grundkörper, der eine Vielzahl von zumindest zu einer der Breitseitenflächen offenen Zellen aufweist, wobei benachbarte Zellen durch Zellwände ausbildende Stege voneinander getrennt sind.

Die Erfindung betrifft darüber hinaus ein Verfahren zur Fertigung einer derartigen Einlegesohle.

Die Erfindung betrifft eine Einlegesohle mit einer an die Fußform eines Benutzers angepassten Form. Die Einlegesohle besteht aus einem Grundkörper, der wiederum aus einem Polymermaterial besteht. Der Grundkörper bildet eine erste Breitseitenfläche aus, die zur Stützung des Fußgewölbes dient und im Wesentlichen der Fußform angepasst ist. Die der ersten Breitseitenfläche gegenüberliegende zweite Breitseitenfläche liegt bei der Verwendung der Einlegesohle an der Sohle eines Schuhs an. Traditionell werden derartige Einlegesohlen handwerklich gefertigt, wobei ein Orthopädie-Schuhmacher den Grundkörper langenweise aus mehreren Schichten aufbaut. Dabei können auch Materialien unterschiedlicher Steifigkeit verwendet werden.

### Stand der Technik

Die DE 10 2013 224 142 A1 schlägt vor, die einzelnen Schichten lagenweise aufzuspritzen beziehungsweise aufzuschmelzen, wobei thermoplastisches Polyurethan verwendet wird. Durch das übereinander Auftragen der Schichten soll eine Mehrzahl von Zellen entstehen, die von Stegen voneinander getrennt sind. Um Bereiche unterschiedlicher Steifigkeit zu realisieren wird dort vorgeschlagen, dass das Polymermaterial Poren enthält, welche eine geometrisch definierte Anordnung aufweisen. Durch mehrere größere Poren soll ein weicheres Material bereitgestellt werden und durch weniger kleine Poren ein härteres Material erzeugt werden.

### Zusammenfassung der Erfindung

Der Erfindung liegt die Aufgabe zugrunde, eine gattungsgemäße Einlegesohle sowohl fertigungstechnisch als auch gebrauchsvorteilhaft weiterzubilden und ein hierzu geeignetes Verfahren anzugeben.

Gelöst wird die Aufgabe durch die in den Ansprüchen angegebene Erfindung, wobei die Unteransprüche nicht nur vorteilhafte Weiterbildungen der in den nebengeordneten Ansprüchen angegebenen Erfindung darstellen, sondern auch eigenständige Lösungen der Aufgabe sind.

Zunächst und im Wesentlichen wird vorgeschlagen, dass zumindest einige der Stege, die zumindest einige der Zellen voneinander trennen geneigte Abschnitte aufweisen. Die Abschnitte sind derart in einer Richtung schräg zu einer lokalen Flächennormalen der im Allgemeinen gekrümmten Breitseitenfläche angeordnet, dass sie sich bei einem in Richtung der lokalen Flächennormalen ausgeübten Druck verbiegen. Die geneigt zur Flächennormalen verlaufenden Zellwände bilden somit Hinterschneidungen aus. Der Neigungswinkel einer derartigen hinterschnittenen Fläche hat einen negativen Wert. Der Betrag des Neigungswinkels kann mindestens 5 Grad oder mindestens 10 Grad betragen. Bei einer Belastung der Breitseitenfläche verbiegt sich die Zellwand unter gleichzeitiger Vergrößerung des Betrages des Neigungswinkels. Die Steifigkeit oder Härte einer Zone kann auch durch die Stärke der Stege eingestellt werden. Gemäß einem weiteren Aspekt der Erfindung sind die Zellwände zumindest einige der Zellen mehrfach gewunden. Die Zellwände können eine mehrfach gekrümmte Oberfläche ausbilden. Sie können in verschiedene Richtungen gekrümmt sein, beispielsweise können sich rechtsgekrümmte Abschnitte der Zellwände mit linksgekrümmten Abschnitten der Zellwände abwechseln. Die Zellwände können sowohl in einer lateralen Erstreckungsrichtung des Grundkörpers, also parallel zur Flächenerstreckung einer der Breitseitenflächen gewunden sein. Die Zellwände können aber auch und insbesondere zusätzlich in einer Richtung quer dazu, also in Tiefenrichtung gewunden sein. An einen beispielsweise konkav gekrümmten Abschnitt einer Zellwand kann ein konvex gekrümmter Abschnitt einer Zellwand angrenzen. Abschnitte der Zellwände können Höhlungen oder Auswölbungen ausbilden, die aneinander angrenzen. Es ist insbesondere vorgesehen, dass die Zellwände knickstellenfrei verlaufende Oberflächen aufweisen. Bevorzugt besitzen zumindest einige der Zellen und besonders bevorzugt besitzt jede Zelle zumindest zu einer der beiden Breitseitenflächen eine Öffnung. Ferner kann vorgesehen sein, dass zumindest einige der Zellen zu beiden Breitseitenflächen hin offen sind. Es bildet sich dann ein Kanal zwischen einer in der ersten Breitseitenfläche liegenden ersten Öffnung und einer in der zweiten Breitseitenfläche liegenden zweiten Öffnung aus. Die beiden Öffnungen können unterschiedliche Öffnungsflächen aufweisen. Der Kanal zwischen den beiden Öffnungen kann eine variable Querschnittsfläche aufweisen, wobei eine minimale Querschnittsfläche zwischen den beiden Öffnungen liegen kann. Es ist aber auch vorgesehen, dass die maximale Querschnittsfläche des Kanals zwischen den beiden Öffnungen verläuft. Das Material des Grundkörpers kann ein polymerisches Material sein und ist insbesondere ein Thermoplast und besonders bevorzugt thermoplastisches Polyurethan. Die Stege können Stirnflächen aufweisen, die jeweils in einer der beiden Breitseitenflächen verlaufen. Die Stirnflächen besitzen eine grobe Erstreckungsrichtung und bilden innerhalb der groben Erstreckungsrichtung verlaufende Strukturen aus. Bei den Strukturen kann es sich um Zickzack-Strukturen oder um wellenförmige Strukturen handeln. Gemäß einem bevorzugten Ausführungsbeispiel erstrecken sich die Stirnflächen entlang von Wellenstrukturen. Die gewellten Strukturen haben eine geradlinige grobe Erstreckungsrichtung. Mehrere derartige gewählte Strukturen können mit einem geringen Abstand zueinander verlaufen. Hierdurch ergeben sich Zellen, bei denen sich gegenüberliegende Zellwände um 1 mm bis 3 mm voneinander beabstandet sind. Die Zellen können langgestreckt sein. Einige der Zellen können eine Vielzahl von Kanälen aufweisen, die Öffnungen in den sich gegenüberliegenden Breitseitenflächen miteinander verbinden. Die in einer gekrümmten Breitseitenfläche verlaufenden Stirnflächen der Stege können aber auch einzelne Bereiche der Breitseitenflächen umschließen, sodass großflächige insbesondere langgestreckt verlaufende Öffnungen entstehen, die über ein oder mehrere Kanäle mit der gegenüberliegenden Breitseitenfläche verbunden sein können. Die Ränder dieser Öffnungen können zumindest Bereichsweise wellenförmig verlaufen. Es können Zonen mit voneinander verschiedenen Härten oder Steifigkeiten vorgesehen sein, wobei Zonen mit einer geringeren Härte oder Steifigkeit Zellwände aufweisen, die eine größere Neigung zur Breitseitenfläche aufweisen, als Zonen mit einer höheren Härte oder Steifigkeit. Es ist aber auch vorgesehen, dass die Stege von Zonen geringerer Härte von Rippen gebildet sind, die schmaler sind, als die Rippen, die Stege von Zonen höherer Härte ausbilden. Ein Randbereich der ersten Breitseitenfläche kann glatt verlaufen. Dieser Randbereich kann eine Breite aufweisen, die im Bereich zwischen 1 mm und 10 mm liegt. Der Randbereich kann aber auch breiter als 10 mm sein. Ein bevorzugter Breitenbereich kann auch 3 mm bis 10 mm betragen. Dieser glatte Randbereich verläuft bevorzugt über den gesamten Rand der ersten Breitseitenfläche und kann verwendet werden, um dort ein Bezugsmaterial mit dem Grundkörper zu verbinden. Dieser glatte Randbereich bildet somit einen Kleberrand mit einer geschlossenen Oberfläche aus. Der Bereich zwischen dem insbesondere glatt verlaufenden Randbereich ist erfindungsgemäß gitterartig ausgebildet. Die Zellen beziehungsweise die Stege bilden hierzu bevorzugt einen offenporigen Schaum aus, wobei sich einige der Poren bevorzugt von einer der Breitseiten bis zur anderen Breitseite erstreckt, sodass der Grundkörper atmungsaktiv ist. Die Zellen können eine minimale freie Querschnittsfläche aufweisen, deren kreisäquivalenter Durchmesser kleiner ist, als der Abstand der beiden Breitseitenflächen.

Ein bevorzugtes Verfahren zur Fertigung der erfindungsgemäßen Einlegesohle ist das Pulver-Sinterverfahren oder das Laser-Sinterverfahren oder der 3D-Druck. Bei dem erfindungsgemäßen Verfahren werden in mehreren Schritten Schichten übereinander aufgebracht. Die Schichten bestehen aus mehreren Rippen, die mit einem Abstand nebeneinander verlaufen. Die Rippen können sich an einigen Stellen berühren. Die Rippen können eine unterschiedliche Breite aufweisen, wobei mit der Breite die Steifigkeit beziehungsweise Härte des Grundkörpers eingestellt werden kann. Die Rippen verlaufen bevorzugt nicht geradlinig. Sie können zickzack-förmig verlaufen. Bevorzugt verlaufen die Rippen aber wellenförmig. Die Schichten können sich in Ebenen erstrecken. Die Rippen, die in einem Schritt beispielsweise mit einer Düse aufgebracht werden, können in einer gemeinsamen Ebene verlaufen. Unmittelbar übereinanderliegende Rippen können versetzt zueinander verlaufen. Die Rippen können in einer Lateralrichtung versetzt zueinander verlaufen. Die Rippen können eine grobe Erstreckungsrichtung aufweisen und bilden innerhalb dieser groben Erstreckungsrichtung Strukturen. Diese Strukturen können eine Wellenform sein. Die grobe Erstreckungsrichtung unmittelbar übereinanderliegender Rippen können winkelversetzt zueinander verlaufen. Die Rippen können nicht nur eine variable Breite sondern auch eine variable Höhe aufweisen. Die Härte beziehungsweise Steifigkeit einer Zone des Grundkörpers kann zum einen durch die Breite und/oder die Höhe der Rippen definiert werden. Es ist aber auch möglich, die Härte beziehungsweise Steifigkeit durch die Lage der unmittelbar übereinander aufgebrachten Rippen derart einzustellen, dass sich hinterschnittene Zellwände ausbilden. Der Verlauf der Rippen kann dem Verlauf einer Mehrkantlinie oder einem Voxel entsprechen. Im Uhrzeigersinn verlaufende Bogenabschnitte können sich mit im Gegenuhrzeigersinn verlaufenden Bogenabschnitte abwechseln. Es kann insbesondere vorgesehen sein, dass der Abstand zweier unmittelbar nebeneinander verlaufenden Rippen, die im selben Fertigungsschritt aufgebracht werden geringer ist, als der Abstand der beiden Breitseitenflächen des fertigen Grundkörpers. Eine dreidimensionale, der Fußform des Benutzers angepasste erste Breitseitenfläche kann mit dem erfindungsgemäßen Verfahren dadurch erstellt werden, dass die Schichten sich jeweils in einer Ebene erstrecken und nur in den Bereichen des Grundkörpers Rippen abgeschieden werden, die gegenüber benachbarten Bereichen erhöht verlaufen.

### Kurze Beschreibung der Zeichnungen

Ein Ausführungsbeispiel der Erfindung wird nachfolgend anhand beigefügter Zeichnungen erläutert. Es zeigen:
- Fig. 1: eine Draufsicht auf eine erste Breitseitenfläche eines Grundkörpers eine Einlegesohle,
- Fig. 2: eine Seitenansicht der Einlegesohle,
- Fig. 3: vergrößert den Ausschnitt III in Figur 1,
- Fig. 4: stark vergrößert den Schnitt gemäß der Linie IV-IV in Figur 3,
- Fig. 5: vergrößert den Ausschnitt V in Figur 1,
- Fig. 6: den Schnitt gemäß der Linie VI-VI in Figur 5,
- Fig. 7: einen Stufenschnitt gemäß der Linie VII-VII in Figur 6 in drei verschiedenen Bereichen A, B, C,
- Fig. 8: eine perspektivische, teilweise aufgebrochene Darstellung eines Grundkörpers 1 der Einlegesohle,
- Fig. 9: den in der Figur 1 mit IX bezeichneten Bereich in sechs verschiedenen Schnitttiefen,
- Fig. 10: eine Draufsicht auf den Grundkörper 1 mit Zonen 16, 17, 18, 19, 20 mit verschiedenen Härten.

### Beschreibung der Ausführungsformen

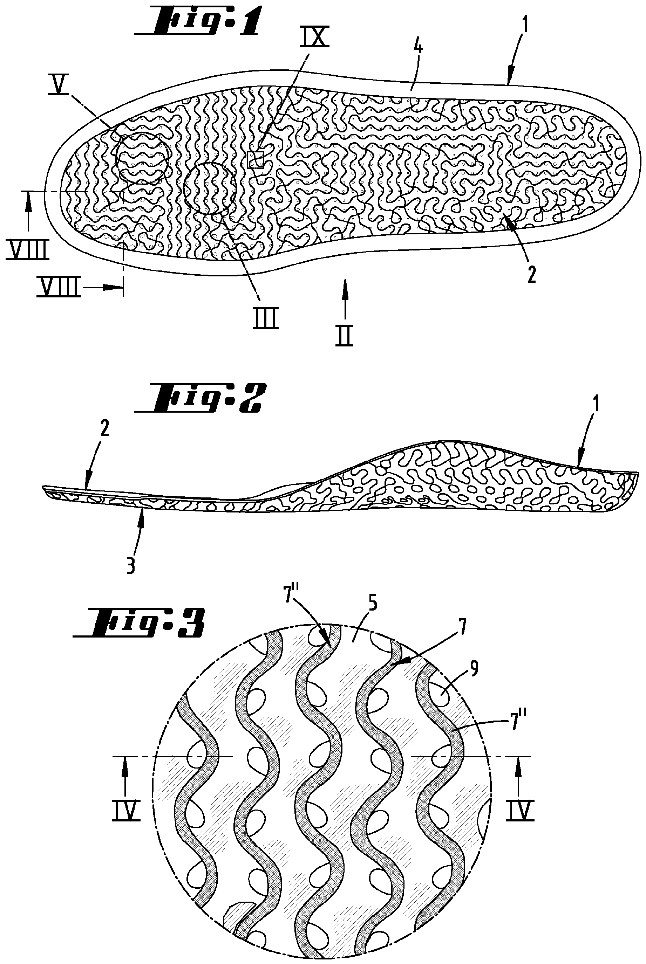

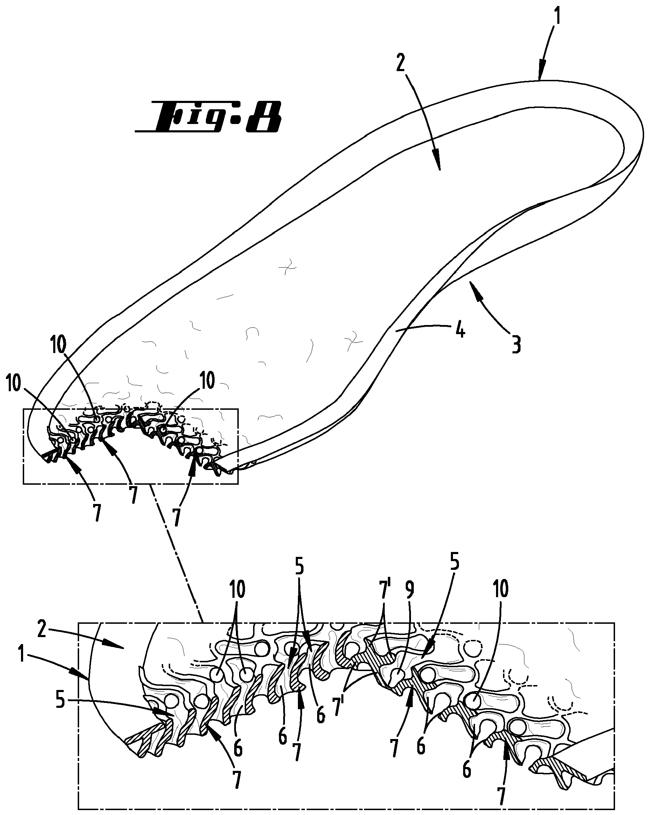

Die Figuren 1 bis 10 zeigen ein Ausführungsbeispiel eines Grundkörpers 1 einer Einlegesohle, der aus einem thermoplastischen Polyurethan im Pulver-Sinterverfahren, Laser-Sinterverfahren oder 3D-Druck hergestellt ist. Eine Einlegesohle besitzt einen derartigen Grundkörper, der mit einem Bezug versehen ist, wobei der Bezug zumindest die das Fußgewölbe unterstützende Breitseitenfläche 2 des Grundkörpers 1 abdeckt, bevorzugt aber auch die zur Schuhsohle weisende zweite Breitseitenfläche 3.

Die nach unten weisende Breitseitenfläche 3 kann auch geschlossen sein. Sie kann eine glatte, geschlossene Oberfläche aufweisen.

Bei dem erfindungsgemäßen Verfahren werden in mehreren aufeinanderfolgenden Fertigungsschritten jeweils sich in einer Ebene erstreckende Schichten 11 bis 15 abgeschieden, wobei jede Schicht 11 bis 15 aus einer Vielzahl von gemäß einer vorgegebenen Struktur nebeneinander verlaufenden Rippen besteht. Beim Ausführungsbeispiel haben die Rippen einen groben Verlauf, der einer Geraden entsprechen kann. Jede Rippe kann eine Wellenstruktur besitzen, wobei die Rippen im Wesentlichen phasengleich nebeneinander verlaufen können. Der Abstand der einzelnen Rippen und die Dicke oder die Höhe der einzelnen Rippen kann variieren. Insbesondere über eine Variation der Dicke der Rippen kann der Grundkörper lokal voneinander verschiedene Härten beziehungsweise Steifigkeiten erhalten. Innerhalb einer Schicht 11 bis 16 können die einzelnen Rippen dieselbe grobe Erstreckungsrichtung aufweisen.

Übereinander angeordnete Schichten 11 bis 16 haben Rippen, deren grobe Erstreckungsrichtung gegenüber einer unmittelbar benachbarten Schicht 11 bis 16 verändert ist. Insbesondere ist vorgesehen, dass die groben Erstreckungsrichtungen der Rippen unmittelbar übereinander angeordnete Schichten 11 bis 16 winkelversetzt zueinander verlaufen. Die Rippen voneinander verschiedener Schichten 11 bis 16 können aber auch versetzt nebeneinander verlaufen. Die Rippen können mittels Düsen aufgebracht werden, durch die ein pulverförmiger oder pastöser Werkstoff hindurchtritt.

Gemäß einem bevorzugten Verfahren wird auf einen Träger schichtweise Pulver aufgetragen, das durch Beaufschlagen mit Laserlicht bereichsweise verfestigt wird.

Eine dreidimensionale Struktur des Grundkörpers 1 wird dadurch erreicht, dass die Rippen nur an ausgewählten Bereichen abgeschieden werden, sodass sich eine dem Fußgewölbe folgende erste Breitseitenfläche 2 ausbildet. Die mehreren übereinander angeordneten Rippen bilden gitternetzartig miteinander verbundene Stege 7 aus, wobei die Stege 7 Zellwände 6 von Zellen 5 ausbilden. Die Zellen 5 besitzen zumindest eine Öffnung 8, 9 in einer der beiden Breitseitenflächen 2, 3 des Grundkörpers 1. Zumindest einige der Zellen 5 bilden offene Kanäle zwischen den beiden Breitseitenflächen 2, 3 des Grundkörpers 1 aus. Es kann vorgesehen sein, dass die Zellwände 6 unter Ausbildung einer Hinterschneidung geneigt zur Breitseitenfläche 2 verlaufen.

Es kann ferner vorgesehen sein, dass die Stege 7 Abschnitte 7' aufweisen, die eine Erstreckungsrichtung R aufweisen, die geneigt zu einer lokalen Flächennormalen N verlaufen. Wird an dieser Stelle ein Druck auf insbesondere die zweite Breitseitenfläche 2 aufgebracht, so kann sich der Abschnitt 7' elastisch verbiegen. Über den Neigungswinkel kann die Steifigkeit beziehungsweise der entsprechenden Zone des Grundkörpers 1 eingestellt werden. Die Steifigkeit beziehungsweise Härte kann aber auch durch die Breite des Abschnittes 7' eingestellt werden.

Es kann ferner vorgesehen sein, dass die Rippen derart aufeinander abgeschieden werden, dass sich Zellen 5 ausbilden, deren Zellwände 6 gekrümmt sind. Die Zellwände 6 können sowohl in lateraler Erstreckungsrichtung des Grundkörpers 1, also insbesondere in Erstreckungsrichtung der Breitseitenflächen 2, 3 gekrümmt sein. Die Zellwände 6 können auch in Tiefenrichtung der Zellen 5 gekrümmt sein. Bevorzugt sind die Zellwände 6 jeweils mehrfach gekrümmt. Konkav gekrümmte Abschnitte der Zellwände 6 können sich mit konvex gekrümmten Abschnitten der Zellwände 6 abwechseln. Die Zellwände 6 können knickstellenfreie Oberflächen aufweisen und dreidimensional gekrümmt sein. Die Zellwände 6 können Höhlungen oder Auswölbungen aufweisen.

Die Figur 3 zeigt eine vergrößerte Draufsicht auf die erste Breitseitenfläche. Eine Zelle 5, die in dem dortigen Bereich der Breitseitenfläche 2 von zwei nebeneinander verlaufenden Stegen 7 begrenzt wird, besitzt eine längliche Öffnung 8 in der zweiten Breitseitenfläche. Mit der Bezugsziffer 9 ist eine Öffnung auf der der ersten Breitseitenfläche 2 gegenüberliegenden Breitseitenfläche 3 bezeichnet. Die Schattierungen zeigen gewundene beziehungsweise gewölbte Bereiche der Zellwände 6.

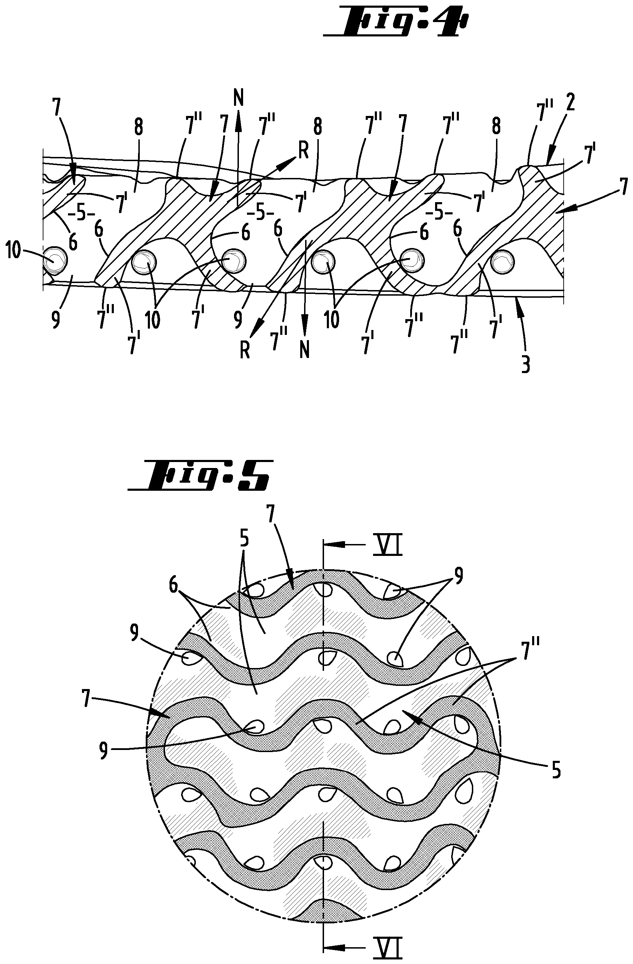

Die Figur 4 zeigt dass sich aufgrund des oben beschriebenen Verfahrens zwischen benachbarten Zellen 5 Stege 7 ausbilden, die im Querschnitt eine H-Form aufweisen. Die Zellen 5 können sich gegenüberliegende Öffnungen 8,9 in den Breitseitenflächen 2, 3 aufweisen. Die Zellen 5 können aber auch zu einer der beiden Breitseitenflächen 2, 3 geschlossen sein. Es ist ferner vorgesehen, dass die Stege 7 Stirnflächen 7" ausbilden, die sich in der Breitseitenfläche 2, 3 erstrecken, wobei die Stirnflächen 7" einen wellenförmigen Verlauf aufweisen (siehe Figuren 3 und 5). Die Stirnflächen 7" erstrecken sich in einer gekrümmten Oberfläche, sodass sie von Rippen verschiedener Schichten 11 bis 15 ausgebildet sind. Dies hat zur Folge, dass die Stirnflächen 7" längliche Öffnungen umschließen können, wobei diese länglichen Öffnungen ein oder mehrere offenen Kanäle zur gegenüberliegenden Breitseitenfläche aufweisen.

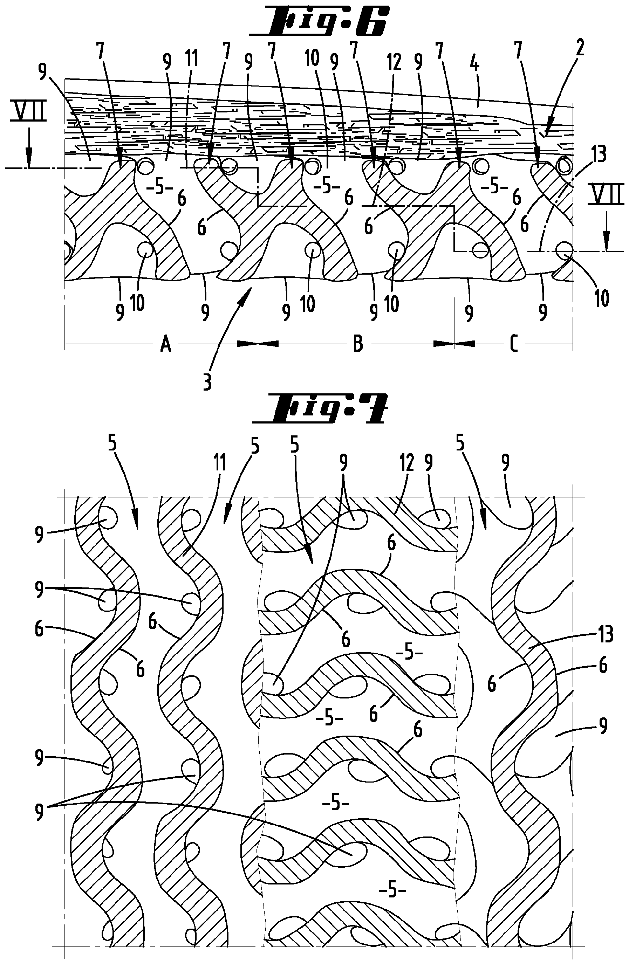

Die Figuren 6 und 7 zeigen benachbarte Bereiche A, B, C, wobei die Figur 7 einen Längsschnitt in verschiedenen Schnitttiefen gemäß der Schnittlinie VII-VII darstellt. Die Figur 7 zeigt insbesondere, dass die in einer Schicht 11 verlaufenden Rippen eine erste grobe Erstreckungsrichtung aufweisen, die quer verläuft zu der groben Erstreckungsrichtung der in einer tieferen Schicht 12 verlaufenden Rippen. Die grobe Erstreckungsrichtung der in der Schicht 11 verlaufenden Rippen ist wiederum gleichgerichtet zu der groben Erstreckungsrichtung der in der Schicht 13 verlaufenden Rippen. Es sind Zwischenschichten vorhanden, in denen die Rippen in einem anderen Winkel verlaufen. Die Rippen voneinander verschiedener Schichten 11 bis 15 können aber auch unterschiedlich geformt sein, also verschiedene Wellenformen aufweisen, wobei sich die Wellenformen von Rippen verschiedener Schichten durch ihre Amplitude und ihre Wellenlänge unterscheiden können. Es ist aber auch vorgesehen, dass sich Rippen, die in einer gemeinsamen Schicht verlaufen durch ihre Wellenform unterscheiden.

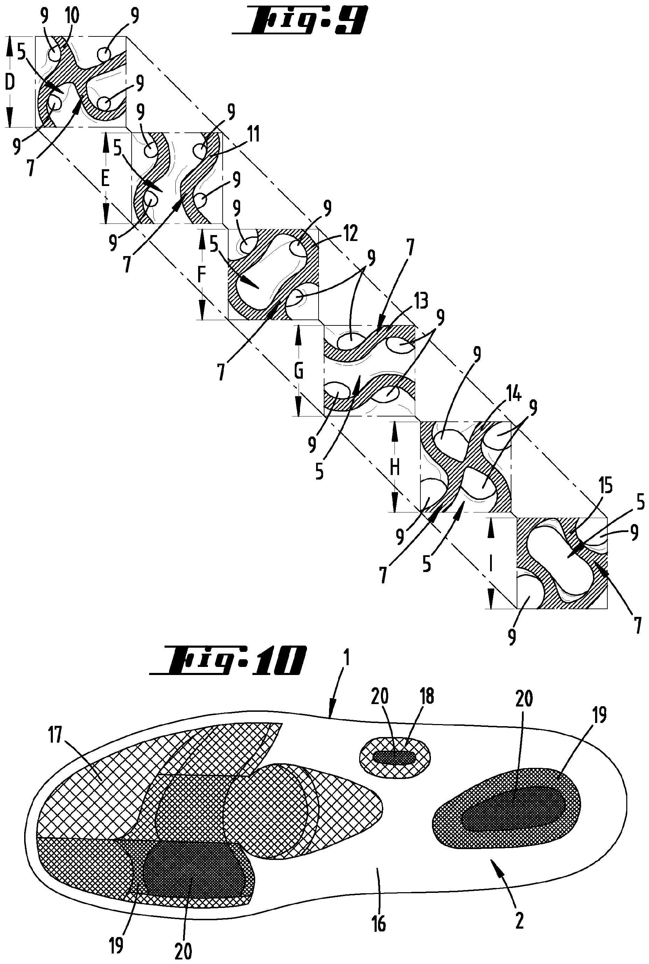

Die Figur 9 zeigt Längsschnitte in verschiedenen Tiefen D, E, F, G, H, in dem mit 9 bezeichneten Bereich der Figur 1. Durch die Anordnung der übereinander angeordneten Rippen ergeben sich Querschnittsebenen, in denen eine Zelle 5 von einer Rippe beispielsweise der Schicht 12 oder 15 ringsumschlossen ist. Es ergeben sich auch Querschnittsebenen, beispielsweise in den Schichten 11 und 13, in denen die Zellen 5 einen langgestreckten Freiraum ausbilden.

Die Figur 9 zeigt Längsschnitte in verschiedenen Tiefen D, E, F, G, H, in dem mit 9 bezeichneten Bereich der Figur 1. Durch die Anordnung der übereinander angeordneten Rippen ergeben sich Querschnittsebenen, in denen eine Zelle 5 von einer Rippe beispielsweise der Schicht 12 oder 15 ringsumschlossen ist. Es ergeben sich auch Querschnittsebenen, beispielsweise in den Schichten 11 und 13, in denen die Zellen 5 einen langgestreckten Freiraum ausbilden.

Die Figur 10 zeigt schematisch, wie durch Änderung der Lage, des Verlaufs oder der Breite der in den verschiedenen Schichten abgeschiedenen Rippen einer Zone 16 mit einer hohen Härte und Zonen 17 bis 20 gefertigt werden können, die jeweils eine geringere Härte aufweisen. Dabei ist die Härte der Zone 17 kleiner als die Härte der Zone 16, die Härte der Zone 18 kleiner als die Härte der Zone 17, die Härte der Zone 19 kleiner als die Härte der Zone 18 und die Härte der Zone 20 kleiner als die Härte der Zone 19.

Die Figur 1 zeigt einen Randbereich 4, der eine Breite von 3-10 mm aufweisen kann und der eine glatte Oberfläche aufweist. Der Randbereich 4 umgibt einen Bereich des Grundkörpers 1, der in der Art eines offenporigen Festkörperschaums ausgebildet ist. Der Randbereich 4 bildet eine Klebezone aus, an der der Bezug am Grundkörper 1 angeklebt werden kann.

Die vorstehenden Ausführungen dienen der Erläuterung der von der Anmeldung insgesamt erfassten Erfindungen, die den Stand der Technik zumindest durch die folgenden Merkmalskombinationen jeweils auch eigenständig weiterbilden, wobei zwei, mehrere oder alle dieser Merkmalskombinationen auch kombiniert sein können, nämlich:

Eine Einlegesohle, die dadurch gekennzeichnet ist, dass zumindest einige der Stege 7 Abschnitte 7' aufweisen, die derart in einer Richtung R schräg zu einer lokalen Flächennormalen N der Breitseitenfläche 2, 3 verlaufen, dass sie sich bei einem in Richtung der lokalen Flächennormalen N ausgeübtem Druck verbiegen und/oder dass die Zellwände 6 zumindest einiger der Zellen 5 mehrfach gewunden sind und/oder dass die Stege 7 einen offenporigen Schaum ausbilden.

Eine Einlegesohle, die dadurch gekennzeichnet ist, dass der Grundkörper 1 aus thermoplastischem Polyurethan besteht und/oder mit dem Pulver-Sinterverfahren oder dem Laser-Sinterverfahren oder im 3D-Druck gefertigt ist.

Eine Einlegesohle, die dadurch gekennzeichnet ist, dass die erste Breitseitenfläche 2 einen glatt verlaufenden Randbereich 4 und/oder einen Bezug aufweist.

Eine Einlegesohle, die dadurch gekennzeichnet ist, dass zumindest einige der Stege 7 in zumindest einer der Breitseitenflächen 2, 3 sich erstreckende Stirnflächen 7" aufweisen, wobei an die Stirnfläche 7" angrenzende Zellwände 6 mit einem negativen Neigungswinkel geneigt zur lokalen Flächennormalen N verlaufen.

Eine Einlegesohle, die dadurch gekennzeichnet ist, dass die Stege 7 von mehreren übereinander aufgebrachten Schichten 11 bis 15 aufgebaut sind, wobei jede Schicht eine Vielzahl von ungeradlinig, insbesondere wellenförmig nebeneinander verlaufende Rippen aufweist, wobei die Rippen unmittelbar übereinander angeordneter Schichten 11 bis 15 versetzt, insbesondere winkelversetzt zueinander verlaufen.

Eine Einlegesohle, die dadurch gekennzeichnet ist, dass zumindest einige der Zellen 5 zu beiden Breitseitenflächen 2, 3 weisende Öffnungen 8, 9 aufweisen.

Eine Einlegesohle, die gekennzeichnet ist durch Zonen 16, 17, 18, 19 mit voneinander verschiedenen Härten oder Steifigkeiten, wobei die Zonen 16 bis 19 Zellwände 6 mit einer höheren Härte oder Steifigkeit aufweisen, die eine geringere Neigung zur Breitseitenfläche 2, 3 und/oder Stege 7 mit einer größeren lateralen Dicke Stegstärke aufweisen, als die Zonen 17, 18, 19, 20 mit einer geringeren Härte oder Steifigkeit.

Eine Einlegesohle, die dadurch gekennzeichnet ist, dass die Zellwände 6 sowohl in einer lateralen Erstreckungsrichtung des Grundkörpers 1 als auch in einer Richtung der Flächennormalen N der Breitseitenflächen 2, 3 gewunden sind und insbesondere mehrfach und/oder in verschiedene Richtungen gekrümmte Oberflächen ausbilden.

Eine Einlegesohle, die dadurch gekennzeichnet ist, dass in mehreren aufeinanderfolgenden Schritten in einem Pulver-Sinterverfahren, einem Laser-Sinterverfahren oder im 3D-Druck schichtweise jeweils ungeradlinige, insbesondere wellenförmig nebeneinander verlaufende Rippen aufeinander aufgebracht werden, wobei die Rippen unmittelbar übereinander angeordneter Schichten 11 bis 15 derart versetzt, insbesondere lateral und/oder winkelversetzt zueinander verlaufen, dass sich eine Vielzahl von zumindest zu einer der Breitseitenflächen 2, 3 offene Zellen 5 ausbilden, wobei benachbarte Zellen 5 durch Zellwände 6 ausbildende Stege voneinander getrennt sind.

Eine Einlegesohle, die dadurch gekennzeichnet ist, dass die Zellwände 6 sowohl in einer lateralen Erstreckungsrichtung des Grundkörpers 1 als auch in einer Richtung der Flächennormalen N der Breitseitenflächen 2, 3 gewunden sind und insbesondere mehrfach und/oder in verschiedene Richtungen gekrümmte Oberflächen ausbilden.

Alle offenbarten Merkmale sind (für sich, aber auch in Kombination untereinander) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren, auch ohne die Merkmale eines in Bezug genommenen Anspruchs, mit ihren Merkmalen eigenständige erfinderische Weiterbildungen des Standes der Technik, insbesondere um auf Basis dieser Ansprüche Teilanmeldungen vorzunehmen. Die in jedem Anspruch angegebene Erfindung kann zusätzlich ein oder mehrere der in der vorstehenden Beschreibung, insbesondere mit Bezugsziffern versehene und/oder in der Bezugsziffernliste angegebene Merkmale aufweisen. Die Erfindung betrifft auch Gestaltungsformen, bei denen einzelne der in der vorstehenden Beschreibung genannten Merkmale nicht verwirklicht sind, insbesondere soweit sie erkennbar für den jeweiligen Verwendungszweck entbehrlich sind oder durch andere technisch gleichwirkende Mittel ersetzt werden können.

**Liste der Bezugszeichen**

| | | | |
|---|---|---|---|
| 1 | Grundkörper | A | Bereich |
| 2 | obere Breitseitenfläche | B | Bereich |
| 3 | untere Breitseitenfläche | C | Bereich |
| 4 | Randbereich | D | Tiefe |
| 5 | Zelle | E | Tiefe |
| 6 | Zellwand | F | Tiefe |
| 7 | Steg | G | Tiefe |
| 7' | geneigter Abschnitt | H | Tiefe |
| 7" | Stirnfläche | N | Flächennormale |
| 8 | Öffnung | | |
| 9 | Öffnung | | |
| 10 | Höhlung | | |
| 11 | Schicht | | |
| 12 | Schicht | | |
| 13 | Schicht | | |
| 14 | Schicht | | |
| 15 | Schicht | | |
| 16 | Zone | | |
| 17 | Zone | | |
| 18 | Zone | | |
| 19 | Zone | | |
| 20 | Zone | | |

## Patentansprüche

1. Einlegesohle mit einem eine erste Breitseitenfläche (2) zur Stützung eines Fußgewölbes und eine von dieser weggewandten zweiten Breitseitenfläche (3) zur Abstützung in einem Schuh aufweisenden Grundkörper (1), der eine Vielzahl von zumindest zu einer der Breitseitenflächen (2, 3) offenen Zellen (5) aufweist, wobei benachbarte Zellen (5) durch Zellwände (6) ausbildende Stege (7) voneinander getrennt sind, **dadurch gekennzeichnet, dass** zumindest einige der Stege (7) Abschnitte (7') aufweisen, die derart in einer Richtung (R) schräg zu einer lokalen Flächennormalen (N) der Breitseitenfläche (2, 3) verlaufen, dass sie sich bei einem in Richtung der lokalen Flächennormalen (N) ausgeübtem Druck verbiegen und/oder dass die Zellwände (6) zumindest einiger der Zellen (5) mehrfach gewunden sind und/oder dass die Stege (7) einen offenporigen Schaum ausbilden.

2. Einlegesohle nach Anspruch 1, **dadurch gekennzeichnet, dass** der Grundkörper (1) aus thermoplastischem Polyurethan besteht.

3. Einlegesohle nach einem der vorhergehenden Ansprüche, **dadurch gekennzeichnet, dass** der Grundkörper (1) mit dem Pulver-Sinterverfahren oder dem Laser-Sinterverfahren oder im 3D-Druck gefertigt ist.

4. Einlegesohle nach einem der vorhergehenden Ansprüche, **dadurch gekennzeichnet, dass** die erste Breitseitenfläche (2) einen glatt verlaufenden Randbereich (4).

5. Einlegesohle nach einem der vorhergehenden Ansprüche, **dadurch gekennzeichnet, dass** die erste Breitseitenfläche (2) einen Bezug aufweist.

6. Einlegesohle nach einem der vorhergehenden Ansprüche, **dadurch gekennzeichnet, dass** zumindest einige der Stege (7) in zumindest einer der Breitseitenflächen (2, 3) sich erstreckende Stirnflächen (7") aufweisen, wobei an die Stirnfläche (7") angrenzende Zellwände (6) mit einem negativen Neigungswinkel geneigt zur lokalen Flächennormalen (N) verlaufen.

7. Einlegesohle nach einem der vorhergehenden Ansprüche, **dadurch gekennzeichnet, dass** die Stege (7) von mehreren übereinander aufgebrachten Schichten (11 bis 15) aufgebaut sind, wobei jede Schicht eine Vielzahl von ungeradlinig, insbesondere wellenförmig nebeneinander verlaufende Rippen aufweist, wobei die Rippen unmittelbar übereinander angeordneter Schichten (11 bis 15) versetzt.

8. Einlegesohle nach Anspruch 7, **dadurch gekennzeichnet, dass** die Rippen lateral versetzt und/oder winkelversetzt zueinander verlaufen.

9. Einlegesohle nach einem der vorhergehenden Ansprüche, **dadurch gekennzeichnet, dass** zumindest einige der Zellen (5) zu beiden Breitseitenflächen (2, 3) weisende Öffnungen (8, 9) aufweisen.

10. Einlegesohle nach einem der vorhergehenden Ansprüche, **gekennzeichnet durch** Zonen (16, 17, 18, 19) mit voneinander verschiedenen Härten oder Steifigkeiten, wobei die Zonen (16 bis 19) Zellwände (6) mit einer höheren Härte oder Steifigkeit aufweisen, die eine geringere Neigung zur Breitseitenfläche (2, 3) aufweisen.

11. Einlegesohle nach einem der vorhergehenden Ansprüche, **gekennzeichnet durch** Zonen (16,17,18,19) in denen die Stege (7) verschiedene Dicken (Stegstärke) aufweisen, wobei insbesondere vorgesehen ist, dass Stege in Zonen (16,17,18,19) eine größere laterale Dicke aufweisen, als in anderen Zonen (17, 18, 19, 20) und/oder dass sich die Stege in voneinander verschiedenen Zonen durch unterschiedliche Härte oder Steifigkeit unterscheiden.

12. Einlegesohle nach einem der vorhergehenden Ansprüche, **dadurch gekennzeichnet, dass** die Zellwände (6) sowohl in einer lateralen Erstreckungsrichtung des Grundkörpers (1) als auch in einer Richtung der Flächennormalen (N) der Breitseitenflächen (2, 3) gewunden sind und insbesondere mehrfach und/oder in verschiedene Richtungen gekrümmte Oberflächen ausbilden.

13. Verfahren zum Herstellen einer Einlegesohle nach einem der vorhergehenden Ansprüche, **dadurch gekennzeichnet, dass** in mehreren aufeinanderfolgenden Schritten in einem Pulver-Sinterverfahren, einem Laser-Sinterverfahren oder im 3D-Druck schichtweise jeweils ungeradlinige, insbesondere wellenförmig nebeneinander verlaufende Rippen aufeinander aufgebracht werden, wobei die Rippen unmittelbar übereinander angeordneter Schichten (11 bis 15) derart versetzt, insbesondere lateral und/oder winkelversetzt zueinander verlaufen, dass sich eine Vielzahl von zumindest zu einer der Breitseitenflächen (2, 3) offene Zellen (5) ausbilden, wobei benachbarte Zellen (5) durch Zellwände (6) ausbildende Stege voneinander getrennt sind.

14. Einlegesohle oder Verfahren, **gekennzeichnet durch** eines oder mehrere der kennzeichnenden Merkmale eines der vorhergehenden Ansprüche.
